# EUROPÄISCHE PATENTANMELDUNG

(11) **EP 0 860 765 A1**
(43) Veröffentlichungstag der Anmeldung: **26.08.1998**
(21) Anmeldenummer: 98890039.5
(22) Anmeldetag: 13.02.1998
(51) Int. Cl.: G06F 3/023

(54) **Eingabevorrichtung und -verfahren für Datenverarbeitungsvorrichtungen**

(30) Priorität: 19.02.1997 AT 280/97
(71) Anmelder: Helmreich, Stephan, Dipl.-Ing., 1180 Wien (AT)
(72) Erfinder: Helmreich, Stephan, Dipl.-Ing., 1180 Wien (AT)
(74) Vertreter: Puchberger, Rolf, Dipl. Ing.

(57) **Zusammenfassung**

Bei einer Eingabevorrichtung für Datenverarbeitungsvorrichtungen mit berührungs-, druck- oder fotosensiblen Feldern (1, 7) in einer oder mehreren Eingabezonen (2, 3, 8) wird vorgeschlagen, daß in mindestens einer Eingabezone (3) jedes beliebige Feld (1, 7) mit jedem anderen beliebigen Feld (1, 7) über eine gerade oder gekrümmte Linie (4, 6) verbindbar ist, die über kein drittes Feld (1, 7) führt.

## Beschreibung

Die Erfindung betrifft eine Eingabevorrichtung für Datenverarbeitungsvorrichtungen mit berührungs-, druck- oder photosensiblen Feldern in einer oder mehreren Eingabezonen sowie ein Eingabeverfahren für eine Datenverarbeitungsvorrichtung durch Aktivierung von in einer oder mehreren Eingabezonen angeordneten berührungs-, druck- oder photosensiblen Feldern, die Befehlen, Schriftzeichen oder Schriftzeichengruppen zugeordnet sind.

Bei Datenverarbeitungsvorichtungen sind zur Eingabe von Befehlen neben dem Eintippen des Befehles über die herkömmliche Tastatur bereits einige andere Möglichkeiten bekannt, die auch Personen, die mit der Anordnung der Tasten auf einer herkömmlichen Tastatur nicht so gut vertraut sind oder die die verwendete Software nicht kennen, ein rasches Arbeiten ermöglichen. Z.B. kann durch Positionierung des Mauszeigers und Anklicken, d.h. Drücken einer Maustaste, ein Befehl am Bildschirm ausgewählt werden. Auch die Berührung eines Befehlfeldes auf einem Touchscreen durch einen Stift oder einen Finger kann zur Durchführung eines Befehles führen.

Auch für die Eingabe von Text existieren bereits Vorrichtungen und Verfahren, die ohne Tastatur oder mit einer verminderten Tastatur auskommen. Diese Vorrichtungen und Verfahren wurden einerseits entwickelt um auf der Tastatur ungeübten Personen das Schreiben zu erleichtern und andererseits zur Anwendung bei kleinen Geräten um Tastaturen mit zu kleinen Tasten zu vermeiden.

Bei einer bekannten Vorrichtung kann mit Hilfe eines Stiftes auf einem drucksensiblen Feld handschriftlich Text niedergeschrieben werden, der durch eine Erkennungssoftware in maschinenlesbare Form gebracht wird. Die Erkennungsrate ist jedoch bei diesen Vorrichtungen niedrig und die Benutzer dieser Systeme sind daher unzufrieden.

Ein anderes Texteingabesytem besteht darin, daß in ein vorgegebenes Feld nacheinander die Buchstaben eines zu schreibenden Wortes handschriftlich eingegeben werden und zwar in einer speziell dafür entwickelten Schrift. Die Erkennung funktioniert in diesem Fall sehr gut, aber die Eingabe ist sehr langwierig und erfordert die Kenntnis der speziellen Schriftzeichen.

Aufgabe der vorliegenden Erfindung ist es eine Eingabemöglichkeit zu schaffen, die ohne oder mit verringerter Tastatur funktioniert und die eine rasche und sichere Eingabe von Befehlen und Text auch durch ungeübte Benutzer erlaubt.

Die Aufgabe wird dadurch gelöst, daß bei der eingangs genannten Eingabevorrichtung in mindestens einer Eingabezone jedes beliebige Feld mit jedem anderen beliebigen Feld über eine gerade oder gekrümmte Linie verbindbar ist, die über kein drittes Feld führt. Das erfindungsgemäße Eingabeverfahren sieht vor, daß zum Eingeben aufeinanderfolgender Befehle, Schriftzeichen und/oder Schriftzeichengruppen gegebenenfalls mit Hilfe eines Stiftes auf der Oberfläche der Eingabezone jeweils eine gerade oder gekrümmte Linie von einem Feld zum darauffolgenden Feld gezogen wird, die über kein drittes Feld führt. So kann z.B. ein Wort dadurch geschrieben werden, daß die Buchstaben, aus denen dieses Wort gebildet wird, nacheinander mit Linien verbunden werden. Die Eingabezone(n) kann bzw. können auf relativ kleinem Raum untergebracht werden und die Eingabe kann einfach und schnell von jedem Benutzer vorgenommen werden.

Insbesondere sind den Feldern Schriftzeichen, d.h. einzelne Buchstaben und/oder Buchstabengruppen und/oder Ziffern und/oder Satzzeichen bzw. Sonderzeichen zugeordnet, denn besonders die Eingabe von Text läßt sich mit der erfindungsgemäßen Vorrichtung rasch durchführen.

Vorteilhafterweise sind die den Buchstaben und/oder Buchstabengruppen zugeordneten Felder in einer ersten Eingabezone und die den Ziffern und/oder Satz- bzw. Sonderzeichen zugeordneten Felder in einer zweiten oder mehreren anderen Eingabezonen angeordnet. Damit sind die einzelnen Eingabezonen aufgrund der geringeren Anzahl an Feldern übersichtlicher und die Zeichen in logische Gruppen geteilt.

Gemäß einer bevorzugten Ausführungsform der Erfindung sind die Felder in der ersten Eingabezone nebeneinander um eine zentrale Fläche angeordnet und mit dem mittleren oberen Feld beginnend den Buchstaben n, d, i, s, f, o, r, w, v, x, y, z, q, u, p, l, k, j, g, c, m, e, h, t, b, a zugeordnet. Dadurch ergibt sich beim "Schreiben" eine besonders effektive Linienführung.

Vorzugsweise ist bei dieser Ausführungsform am äußeren Rand der ersten Eingabezone ein an alle übrigen Felder dieser Eingabezone angrenzendes Feld vorgesehen, das einem Leerzeichen (Blank) zugeordnet ist. Liegen die Buchstabenfelder z.B. auf einem Kreis so ist um den Kreis ein an die Felder angrenzendes, ringförmiges Feld vorgesehen, dessen Berührung ein Blank auslöst; d.h., daß jeder Buchstabe an Blank angrenzt. Dadurch kommt man dem handschriftlichen Schreiben sehr nahe, weil man nach jedem Wort neu ansetzt. Außerdem wird dadurch das Schreiben von Blanks vereinfacht und der Radius des Buchstabenkreises kann verkleinert werden.

Weiters ist vorzugsweise vorgesehen, daß links und rechts seitlich der ersten Eingabezone je eine Eingabezone mit vier Feldern angeordnet ist, die den Zeichen ., !, ?, " einerseits und den Zeichen @, (, ), Cps (Großbuchstaben) andererseits zugeordnet sind und daß unterhalb der ersten Eingabezone eine Eingabezone mit 14 Feldern vorgesehen ist, die den Ziffern 1, 2, 3, 4, 5, 6, 7, 8, 9, 0 und den Zeichen +, -, :, = zugeordnet sind, wodurch sich eine besonders übersichtliche Anordnung der zur Verfügung stehenden Zeichen präsentiert.

Die Eingabezone(n) ist (sind) vorzugsweise Teil eines Bildschirmes bzw. eines Displays der Datenverarbeitungsvorrichtung um ein kompaktes Gerät zu schaffen. Selbstverständlich ist aber auch eine getrennte Eingabevorrichtung gemäß der Erfindung denkbar.

Gemäß einer bevorzugten Ausführungsform der Erfindung sind die Felder in mindestens einer Eingabezone nebeneinander am Umfang eines Kreises oder einer Ellipse angeordnet, um die Abstände zwischen den einzelnen Feldern und damit die zu fahrenden Linien möglichst kurz und gerade zu halten.

Insbesondere sind die Felder, die bei der Eingabe häufig aufeinanderfolgen möglicht nahe zueinander angeordnet und/oder durch gerade Linien verbindbar. So können z.B. die Buchstaben eines in einer Sprache am häufigsten vorkommenden Wortes direkt nebeneinander angeordnet sein oder z.B. in einem kleinen Dreieck.

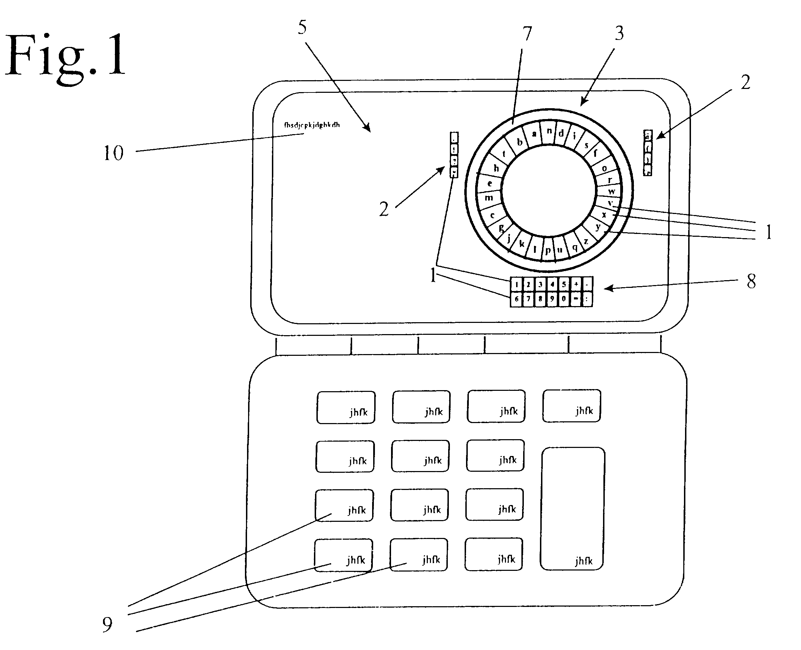

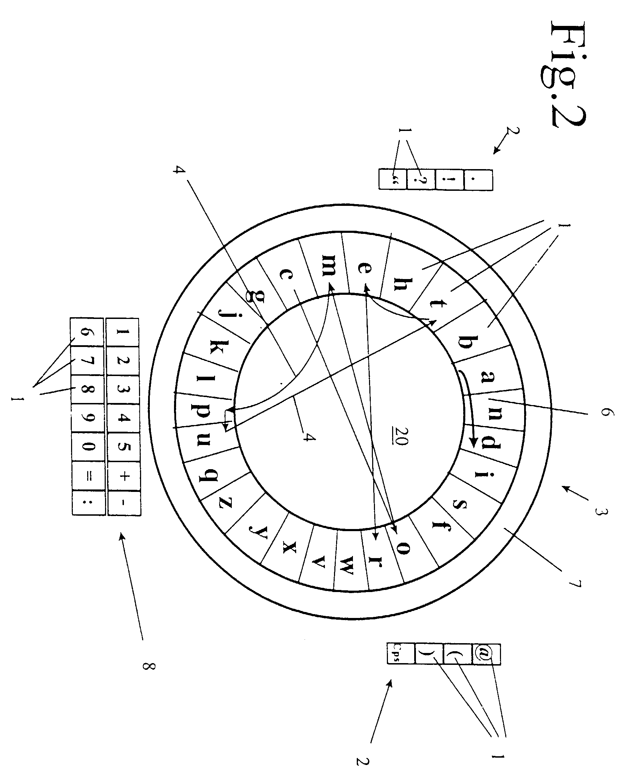

Im Folgenden wird die Erfindung anhand eines Ausführungsbeispieles und in bezug auf die beiliegenden Zeichnungen näher beschrieben. Dabei zeigt Fig. 1 eine kleine tragbare Datenverarbeitungsvorrichtung, wie z.B. einen Organizer und die Fig. 2 zeigt eine Detailansicht des Displays des Organizers aus Fig. 1.

In dem dargestellten Ausführungsbeispiel zeigt die Fig. 1 eine Datenverarbeitungsvorrichtung, die mit einer erfindungsgemäßen Eingabevorrichtung versehen ist und daher eine Tastatur mit nur wenigen Tasten 9 enthält. Die verbleibenden Tasten 9 können groß gestaltet werden und sind daher leicht auch mit einem Finger zu bedienen. Wie üblich, ist im oberen, als Deckel dienenden Teil der tragbaren Datenverarbeitungsvorrichtung das Display 5 integriert. Zur Eingabe von Befehlen und Zeichen, die nicht über die verminderte Tastatur eingegeben werden können, erscheinen am Display 5 Eingabezonen 2, 3, 8, die Felder 1, 7 mit zugeordneten Buchstaben, Buchstabengruppen, Ziffern, Satz- bzw. Sonderzeichen oder Befehlen enthalten. Eine beispielhafte Zuordnung ist in Fig. 2 dargestellt. Dabei enthalten die Eingabezonen 2, 8 Felder 1 mit Ziffern und Satzzeichen. In der Eingabezone 3 sind die Felder 1, 7 kreisförmig nebeneinander angeordnet und den einzelnen Buchstaben des Alphabets zugeordnet. Weiters findet man ein ringförmiges Feld 7 für ein Leerzeichen oder BLANK, das am äußeren Randbereich der Eingabezone 3 angeordnet ist und an jedes Buchstabenfeld 1 grenzt. Die einzelnen Felder sind berührungs-, druck- oder photosensibel, so daß bei einer Berührung, z.B. mit einem geeigneten Stift, an einer beliebigen Stelle in einem Feld 1, 7 der dem Feld 1, 7 zugeordnete Befehl bzw. das zugeordnete Zeichen eingegeben wird. Die Eingabe kann dabei, z.B. auf der linken Hälfte 10 des Displays 5 angezeigt und kontrolliert werden. In den Eingabezonen 2, 8 erfolgt die Eingabe durch Antippen der einzelnen Felder 1, d.h. der Stift muß nach Berührung eines Feldes 1 wieder von der Oberfläche des Displays 5 entfernt werden, es sei denn das darauffolgende Zeichen ist in unmittelbarer Nachbarschaft angeordnet. In der Eingabezone 3 ist durch die Anordnung der Felder 1, 7 nebeneinander entlang einer Kreislinie jedes Feld 1, 7 mit jedem beliebigen anderen Feld 1, 7 über eine gerade oder gekrümmte Linie 4, 6 verbindbar, ohne daß diese Linie 4, 6 über ein drittes Feld 1, 7 führt. So kann ein Wort eingegeben werden, indem die einzelnen Buchstaben, wie sie in dem Wort aufeinanderfolgen, durch Linien 4, 6 miteinander verbunden werden. Ein Absetzen des Stiftes ist dabei nicht erforderlich. Im dargestellten Beispiel sind die Linien 4 dargestellt, die mit dem Stift abgefahren werden müssen, um das Wort "Computer" einzugeben.

Die Buchstaben sind den Feldern vorzugsweise so zugeordnet, daß die Buchstaben häufig zu bildender Worte unmittelbar nebeneinander liegen, wie z.B. die Buchstaben A N D, als häufiges englisches Wort "and", so daß sie durch eine kurze Linie entsprechend der Linie 6 verbunden werden können, oder sie sind so angeordnet, daß die Linien möglichst gerade und kurz sind.

Zusätzlich oder an Stelle der Felder 1 mit den Einzelbuchstaben können auch Felder vorgesehen sein, die Buchstabengruppen zugeordnet sind, insbesondere häufig verwendeten Worten oder Silben, so daß noch schneller mit der erfindungsgemäßen Eingabevorrichtung geschrieben werden kann.

Selbstverständlich ist die gezeigte Anordnung der Buchstaben beliebig veränderbar und es wird sich je nach Sprache und Einsatzgebiet der Datenverarbeitungsvorrichtung eine andere Anordnung der Zeichen empfehlen.

An Stelle der Eingabezone 2, 8, deren Felder 1 durch Antippen auswählbar sind, könnte auch eine zweite Eingabezone entsprechend der Eingabezone 3 vorgesehen sein, so daß alle Zeichen und Befehle durch Linienkombinationen eingegeben werden können.

Die Form der Eingabezone 3 ist nicht auf die Kreisform beschränkt, wichtig ist nur, daß die Felder 1, 7 so angeordnet sind, daß jedes beliebige Feld 1, 7 mit jedem anderen beliebigen Feld 1, 7 durch eine gerade oder gekrümmte Linie 4, 6 verbunden werden kann, die über kein drittes Feld 1, 7 führen muß.

Alternativ kann die Eingabevorrichtung gemäß der Erfindung nicht im Display 5 der Datenverarbeitungsvorrichtung vorgesehen sein, sondern es könnte z.B. ein Eingabebereich auf der Tastaturebene vorgesehen sein, oder auch eine externe Eingabevorrichtung als Zusatzvorrichtung zu der Datenverarbeitungsvorrichtung an dieselbe angesteckt werden.

Im Prinzip können beliebig viele Eingabezonen gemäß der Eingabezone 3 vorgesehen sein, so daß eine Einteilung der zur Verfügung stehenden Zeichen in logische Gruppen stattfinden kann. Es ist aber auch denkbar, daß alle Zeichen in einer einzigen Eingabezone untergebracht sind, oder daß ein Teil der Zeichen über die Tastatur und die anderen Zeichen über die erfindungsgemäße Eingabevorrichtung eingegeben werden können.

## Patentansprüche

1. Eingabevorrichtung für Datenverarbeitungsvorrichtungen mit berührungs-, druck- oder fotosensiblen Feldern in einer oder mehreren Eingabezonen, dadurch gekennzeichnet, daß in mindestens einer Eingabezone (3) jedes beliebige Feld (1, 7) mit jedem anderen beliebigen Feld (1, 7) über eine gerade oder gekrümmte Linie (4, 6) verbindbar ist, die über kein drittes Feld (1, 7) führt.

2. Vorrichtung nach Anspruch 1, dadurch gekennzeichnet, daß den Feldern (1, 7) Schriftzeichen, d.h. einzelne Buchstaben und/oder Buchstabengruppen und/oder Ziffern und/oder Satzzeichen bzw. Sonderzeichen zugeordnet sind.

3. Vorrichtung nach Anspruch 2, dadurch gekennzeichnet, daß die den Buchstaben und/oder Buchstabengruppen zugeordneten Felder (1, 7) in einer ersten Eingabezone (3) und die den Ziffern und/oder Satz- bzw. Sonderzeichen zugeordneten Felder in einer zweiten oder mehreren anderen Eingabezonen (2, 8) angeordnet sind.

4. Vorrichtung nach Anspruch 3, dadurch gekennzeichnet, daß die Felder (1) in der ersten Eingabezone (3) nebeneinander um eine zentrale Fläche (20) angeordnet sind und mit dem mittleren oberen Feld beginnend den Buchstaben n, d, i, s, f, o, r, w, v, x, y, z, q, u, p, l, k, j, g, c, m, e, h, t, b, a zugeordnet sind.

5. Vorrichtung nach Anspruch 3, dadurch gekennzeichnet, daß am äußeren Rand der ersten Eingabezone (3) ein an alle übrigen Felder (1) dieser Eingabezone (3) angrenzendes Feld (7) vorgesehen ist, das einem Leerzeichen (Blank) zugeordnet ist.

6. Vorrichtung nach Anspruch 4 oder 5, dadurch gekennzeichnet, daß links und rechts seitlich der ersten Eingabezone (3) je eine Eingabezone (2) mit vier Feldern (1) angeordnet ist, die den Zeichen ., !, ?, " einerseits und den Zeichen @, (, ), Cps (Großbuchstaben) andererseits zugeordnet sind und daß unterhalb der ersten Eingabezone (3) eine Eingabezone (8) mit 14 Feldern (1) versehen ist, die den Ziffern, 1, 2, 3, 4, 5, 6, 7, 8, 9, 0 und den Zeichen +, -, :, = zugeordnet sind.

7. Vorrichtung nach einem der vorhergehenden Ansprüche, dadurch gekennzeichnet, daß die Eingabezone(n) (2, 3, 8) Teil eines Bildschirmes bzw. eines Displays (5) der Datenverarbeitungsvorrichtung ist (sind).

8. Vorrichtung nach einem der vorhergehenden Ansprüche, dadurch gekennzeichnet, daß die Felder (1, 7) in mindestens einer Eingabezone (3) nebeneinander am Umfang eines Kreises oder einer Ellipse angeordnet sind.

9. Vorrichtung nach einem der vorhergehenden Ansprüche, dadurch gekennzeichnet, daß die Felder (1), die bei der Eingabe häufig aufeinanderfolgen möglicht nahe zueinander angeordnet sind und/oder durch gerade Linien verbindbar sind.

10. Eingabeverfahren für eine Datenverarbeitungsvorrichtung durch Aktivierung von in einer oder mehreren Eingabezonen angeordneten berüh-rungs-, druck- oder fotosensiblen Feldern, die Befehlen, Schriftzeichen oder Schriftzeichengruppen zugeordnet sind, dadurch gekennzeichnet, daß zum Eingeben aufeinanderfolgender Befehle, Schriftzeichen und/oder Schriftzeichengruppen gegebenenfalls mit Hilfe eines Stiftes auf der Oberfläche der Eingabezone (3) jeweils eine gerade oder gekrümmte Linie (4, 6) von einem Feld (1, 7) zum darauffolgenden Feld (1, 7) gezogen wird, die über kein drittes Feld (1, 7) führt.
